# EUROPÄISCHE PATENTSCHRIFT

(11) **EP 0 983 579 B1**
(45) Veröffentlichungstag und Bekanntmachung des Hinweises auf die Patenterteilung: **14.08.2002**
(21) Anmeldenummer: 98928334.6
(22) Anmeldetag: 28.05.1998
(51) Int. Cl.: G08B 13/24

(54) **VERFAHREN ZUR HERSTELLUNG EINES MEHRLAGIGEN ETIKETTS UND VORRICHTUNG ZUR DURCHFÜHRUNG DES VERFAHRENS**
METHOD FOR PRODUCING A MULTI-LAYER LABEL AND DEVICE FOR IMPLEMENTING SAID METHOD
PROCEDE ET DISPOSITIF POUR LA PRODUCTION D'UNE ETIQUETTE MULTICOUCHE

(30) Priorität: 28.05.1997 DE 19722327
(43) Veröffentlichungstag der Anmeldung: 08.03.2000
(73) Patentinhaber: AVERY DENNISON CORPORATION, Pasadena, California 91103 (US)
(72) Erfinder: MYNOTT, Stephen, Arthur, Lexington, MA 02173 (US); KUZMA, Peter, John, Richboro, PA 18954 (US); ARABIN, Dieter, D-35428 Langgöns (DE)
(74) Vertreter: Kahlhöfer, Hermann, Dipl.-Phys.
(86) Internationale Anmeldenummer: EP9803202
(87) Internationale Veröffentlichungsnummer: WO9854681

(56) Entgegenhaltungen:
- EP-A- 0 446 910
- US-A- 5 602 528

## Beschreibung

Die Erfindung betrifft ein Verfahren zur Herstellung eines mehrlagigen Etiketts, bei welchem mittels zweier paralleler Laminierwalzen zwei Materialbahnen zusammengeführt werden und bei dem auf eine Trägerbahn mit Abstand zueinander Abschnitte einer Beschichtungsbahn gelangen. Weiterhin betrifft die Erfindung eine Vorrichtung zur Durchführung dieses Verfahrens.

Ein Verfahren und eine Vorrichtung der vorstehenden Art ist in der WO 86/05302 beschrieben. In den Figuren 18 und 19 dieser Schrift wird gezeigt, wie zwei Materialbahnen mittels zweier Laminierwalzen zusammengeführt und miteinander verbunden werden. Auf diesen Materialbahnen wurden zuvor mit gegenseitigem Abstand Abschnitte aufgebracht, welche aus Leiterbahnfolien mit jeweils einem elektrischen Schwingkreis bestehen und dazu dienen, mit dem Etikett versehene Waren zu sichern, indem der Schwingkreis in einem nicht deaktivierten Zustand ein Warnsignal auslöst.

Ein weiteres Beispiel für ein solches Verfahren ist aus der US-A-5602528 bekannt.

Das Positionieren von Abschnitten auf einer Trägerfolie stellt einen sehr aufwendigen Arbeitsgang dar und beschränkt bei der Massenherstellung von Etiketten die Produktionsgeschwindigkeit. Weiterhin führt die erforderliche Handhabung der ausgeschnittenen Abschnitte oftmals zu Störungen.

Um solche Störungen zu vermeiden, ist es durch die US-A-5,059,950 bekannt, eine Trägerbahn mit einer Beschichtungsbahn derart zusammenzubringen, dass die als Sicherungselemente ausgebildeten Abschnitte auf der Trägerbahn den gleichen gegenseitigen Abstand haben wie auf der diese Abschnitte aufweisenden Beschichtungsbahn. Man muss dann nach dem Zusammenführen der beiden Materialbahnen diese gemeinsam durchtrennen, um mit jeder Trennung ein Etikett mit einem Abschnitt zu erhalten. Der Vorteil eines solchen Verfahrens liegt darin, dass erst ganz zum Schluss einzelne Etikette entstehen, so dass ein Positionieren der Abschnitte relativ zur Trägerbahn nicht mehr erforderlich wird. Nachteilig dabei ist es jedoch, dass die Abschnitte zwangsläufig auf der Trägerbahn genau den gleichen gegenseitigen Abstand haben wie auf der Beschichtungsbahn. Wollte man Etikette erzeugen, welche größer sind als die Abschnitte, dann müsste man eine Beschichtungsbahn verwenden, bei der die die Abschnitte bildenden Sicherungselemente gegenseitigen Abstand haben, was bei der Beschichtungsbahn eine Materialverschwendung darstellen würde und ein Verändern der Abstände nur möglich machen würde, wenn die Beschichtungsbahn entsprechend geändert wird.

Der Erfindung liegt das Problem zugrunde, ein Verfahren der eingangs genannten Art so weiterzubilden, dass besonders einfach, rasch und zuverlässig Etikette hergestellt werden können, welche großflächiger sind als ein auf ihm vorgesehener Abschnitt, insbesondere ein Sicherungselement, wobei der Abstand der Abschnitte nicht nur in Bewegungsrichtung einer Trägerbahn, sondern auch quer hierzu veränderbar sein soll. Weiterhin soll eine Vorrichtung zur Durchführung dieses Verfahrens entwickelt werden.

Das erstgenannte Problem wird erfindungsgemäß dadurch gelöst, dass die Beschichtungsbahn den Laminierwalzen oder einem vorgeschalteten walzenpaar mit der Umfangsgeschwindigkeit Walzenpaares abwechselnd zugeführt, dann ein zugeführter Abschnitt der Beschichtungsbahn abgetrennt und anschließend die Beschichtungsbahn für einen definierten Zeitraum stillgesetzt wird.

Durch diese Verfahrensweise entfällt das zeitaufwendige und mit einer großen Störanfälligkeit behaftete Handhaben und Positionieren von einzelnen Abschnitten auf der Trägerbahn. Die Abschnitte können genau wie bei dem Verfahren gemäß der zuvor behandelten US-A-5,059,950 kontinuierlich mittels der Beschichtungsbahn der Trägerbahn zugeführt werden und brauchen erst unmittelbar vor oder während des Laminierens von der Beschichtungsbahn abgetrennt werden. Trotz dieser Verfahrensweise wird es möglich, die Abstände zwischen den Abschnitten auf der Trägerbahn zu verändern, indem man die Beschichtungsbahn mehr oder weniger lang stillsetzt und dadurch die Trägerbahn mehr oder weniger weit voreilen lässt. Hierdurch ist das erfindungsgemäße Verfahren so zuverlässig und vermag so rasch durchgeführt zu werden wie das nach der genannten US-A-5,059,950, ist jedoch ähnlich variabel wie das nach der WO 86/05302.

Bei der Durchführung des Verfahrens entfällt der Arbeitsgang des Aufbringens einer Klebeschicht, wenn eine Trägerbahn mit einer der Beschichtungsbahn zugewandten Klebeschicht verwendet wird.

Günstig ist es auch, wenn gemäß einer anderen Weiterbildung des Verfahrens die auf der Trägerbahn aufgebrachte Klebeschicht zunächst mit einer Schutzfolie abgedeckt und diese vor dem Zusammenbringen der Trägerbahn mit der Beschichtungsbahn entfernt wird. Dadurch bleibt die Klebeschicht so lange wie möglich vor ungewolltem Anhaften geschützt. Die Wiederverwendung der entfernten Schutzfolie ist nach dem Aufbringen der Beschichtungsbahn möglich.

Wenn auf einer breiten, später in mehrere einzelne Etikettenbahnen zu trennenden Trägerbahn mehrere Reihen von Abschnitten nebeneinander aufgebracht werden sollen, dann lässt sich auch der gegenseitige Abstand der Abschnitte von Reihe zu Reihe verändern, wenn die Beschichtungsbahn vor dem Aufbringen auf die Trägerbahn mittels eines Fächers in zwei oder mehrere Längsstreifen unterteilt wird.

Das zweitgenannte Problem, nämlich die Schaffung einer Vorrichtung zur Durchführung des erfindungsgemäßen Verfahrens, wird erfindungsgemäß bei einer Vorrichtung, welche zum Zusammenführen von zwei Materialbahnen zwei parallele Laminierwalzen hat, dadurch gelöst, dass vor den parallelen Laminierwalzen eine von einem Servomotor angetriebene Zuführvorrichtung angeordnet ist, welche zum abwechselnden Stillsetzen und Antreiben der Beschichtungsbahn mit der Geschwindigkeit der Trägerbahn ausgelegt ist.

Ein solche Vorrichtung erlaubt es auf einfache Weise, die Zufuhr der Beschichtungsbahn für definierte Zeiträume zu unterbrechen und dadurch die Abstände der Abschnitte auf der Trägerbahn definiert zu verändern. Deshalb ermöglicht es die erfindungsgemäße Vorrichtung, die Abstände der Abschnitte auf der Trägerbahn allein durch unterschiedliche Einstellungen der Vorrichtung und Verändern des Schneidwerkes zu verändern. Trotz dieser Einstellmöglichkeit ist die erfindungsgemäße Vorrichtung sehr einfach aufgebaut und vermag schnell zu arbeiten, weil keine separaten Abschnitte gehandhabt und auf der Trägerbahn positioniert werden müssen.

Die einzelnen Abschnitte der Beschichtungsbahn können in einem Arbeitsgang mit dem Laminieren von der Beschichtungsbahn abgetrennt werden, wenn die eine Laminierwalze mit mindestens einem Stanzmesser besetzt ist, welches aus der Kontur der Laminierwalze ausschließlich zum Durchtrennen der auf der Trägerbahn aufgebrachten Beschichtungsbahn vorspringt.

Die Zuführvorrichtung braucht beim Zuführen eines Abschnittes der Beschichtungsbahn zu den Laminierwalzen nicht die gesamte Beschichtungsbahn zu beschleunigen, wenn zum Spannen der Beschichtungsbahn vor der Zuführeinrichtung eine von der Beschichtungsbahn teilweise umschlungene Walze an einem Pendel angeordnet ist. Durch die Walze an dem Pendel wird ein Puffer geschaffen, dem mittels der Zuführvorrichtung der jeweils benötigte Bereich der Beschichtungsbahn entnommen wird. Weiterhin wird hierdurch erreicht, dass die Beschichtungsbahn mit konstanter Geschwindigkeit von einer Vorratsrolle abgewickelt werden kann.

Eine nicht ausreichende abgepufferte Länge der Beschichtungsbahn oder ein zu rasches Abwickeln der Beschichtungsbahn von der Vorratsrolle lassen sich mit sehr einfachen Mitteln vermeiden, wenn gemäß einer anderen Weiterbildung der Erfindung das Pendel Steuermittel zum Steuern eines ihm vorgeschalteten Vorschubantriebs zum Abwickeln der Beschichtungsbahn von einer Vorratsrolle hat.

Wenn die Vorrichtung zum Schneiden der Beschichtungsbahn in mehrere parallel laufende Streifen ausgebildet ist, kann man zwischen dem Vorschubantrieb und dem Pendel eine Fächer zum Spreizen der Streifen anordnen. Dann wird es möglich, nicht nur den Abstand der Abschnitte in Bewegungsrichtung der Trägerbahn, sondern auch den Abstand der Abschnitte quer hierzu zu verändern.

Ein unbeabsichtigtes Zusammenkleben der beiden Materialbahnen vor den Laminierwalzen lässt sich dadurch verhindern, dass an der Einlaufseite der Laminierwalzen ein die Beschichtungsbahn von der Trägerbahn bis zum Einlauf in die Laminierwalzen trennendes Trennelement angeordnet ist. Dieses Trennelement kann beispielsweise als Trennblech ausgebildet sein oder aus Trennstäben bestehen.

Statt die Abschnitte erst nach dem Aufbringen auf die Trägerbahn von der Beschichtungsbahn abzutrennen, kann man den Arbeitsgang des Abtrennens auch unmittelbar zuvor durchführen. Eine hierzu ausgebildete Vorrichtung zeichnet sich dadurch aus, dass der Laminierwalze zum Zuführen der Beschichtungsbahn eine zusätzliche Schneidwalze zum Abtrennen der Abschnitte der Beschichtungsbahn zugeordnet ist und dass die Laminierwalze zum Transport der Abschnitte zur Trägerbahn auf der anderen Laminierwalze ausgebildet ist.

Die abgetrennten Abschnitte müssen nach dem Abtrennen auf der Schneidwalze gehalten bleiben, damit sie ohne ihre Lage zu verändern der Trägerbahn zugeführt werden können. Hierzu könnte man die Abschnitte durch Unterdruck auf der Schneidwalze halten. Besonders einfach ist die Schneidwalze gestaltet, wenn der Laminierwalze zum Zuführen der Beschichtungsbahn mit einer ihre Mantelfläche zwischen der Schneidwalze und der Laminierwalze abdeckenden Andrückvorrichtung versehen ist.

Ein Abtrennen der Abschnitte von der Beschichtungsbahn erfolgt zwangsläufig stets genau im richtigen Bereich, so dass bei Sicherungselementen als Abschnitte keine Gefahr besteht, dass diese durch nicht richtig plazierte Schnitte zerstört werden, wenn gemäß einer anderen Weiterbildung der Erfindung zur Steuerung der Zuführeinrichtung vor den Laminierwalzen eine Messeinrichtung zum Erkennen eines Abschnittendes auf der Beschichtungsbahn angeordnet ist.

Die Erfindung lässt zahlreiche Ausführungsformen zu. Zur weiteren Verdeutlichung des Verfahrens sind zwei Ausführungsformen der Vorrichtung in der Zeichnung dargestellt und werden nachfolgend beschrieben. Diese zeigt in
- Fig.1: einen Längsschnitt durch die Vorrichtung zur Durchführung des Verfahrens,
- Fig.2: eine Detaildarstellung der Figur 1,
- Fig.3: eine weitere erfindungsgemäße Ausführungsform.

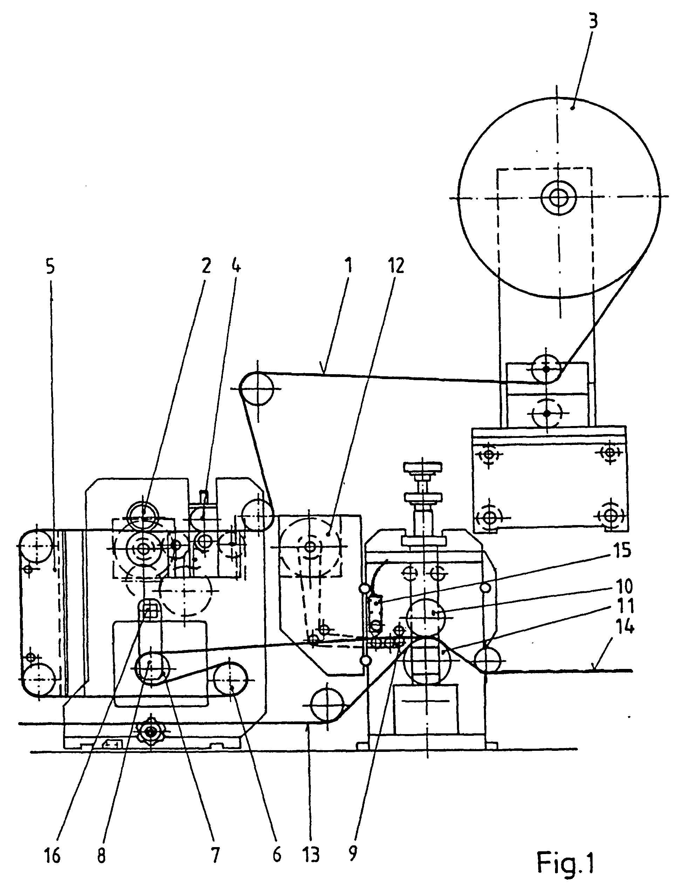

Die Figur 1 zeigt eine Vorrichtung zur Herstellung eines mehrlagigen Etiketts als Ganzes. In ihr wird eine Beschichtungsbahn 1 mittels eines Vorschubantriebs 2 von einer Vorratsrolle 3 abgezogen. Diese Beschichtungsbahn 1 wird mittels einer Schneideinrichtung 4 in mehrere parallel laufende Bahnen getrennt, welche mittels eines Fächers 5 zunächst auf einen gegenseitigen Abstand gespreizt und dann über eine Umlenkrolle 6 einer Walze 7 zugeführt werden. Diese Walze 7 ist am freien Ende eines Pendels 8 angeordnet, welches auf nicht näher gezeigte Weise in Figur 1 gesehen nach links vorgespannt ist.

Von der Walze 7 führt die Beschichtungsbahn 1 über eine Zuführvorrichtung 9 zwischen zwei Laminierwalzen 10, 11. Die Zuführvorrichtung 9 ist mittels eines Servomotors 12 abwechselnd antreibbar und stillzusetzen.

Zusätzlich zur Beschichtungsbahn 1 läuft eine Trägerbahn 13 in die Vorrichtung zwischen die Laminierwalzen 10, 11, wo Abschnitte 14 der Beschichtungsbahn 1 mit der Trägerbahn 13 verklebt werden. Zuvor wird die genaue Position der Abschnitte 14 mittels einer Messeinrichtung 15 ermittelt, welche vor der Zuführvorrichtung 9 oberhalb der Beschichtungsbahn 1 angeordnet ist.

Beim Arbeiten der Vorrichtung befindet sich das Pendel 8 in der dargestellten Zwischenstellung, aus welcher heraus es nach beiden Seiten schwingen kann, um die Beschichtungsbahn 1 stets gespannt zu halten. Ein Potentiometer 16 verstellt sich mit dem Ausschwingen des Pendels 8 und steuert danach den Vorschubantrieb 2, durch welchen die Beschichtungsbahn 1 von der Vorratsrolle 3 abgewickelt wird.

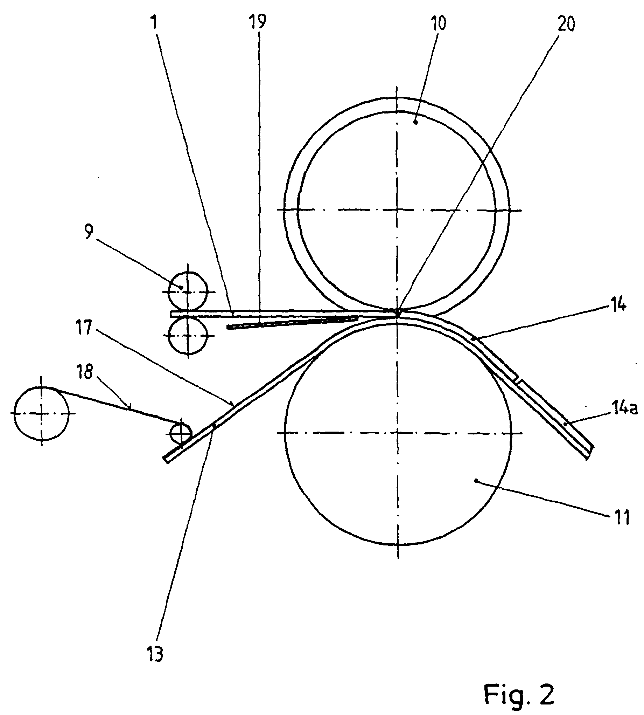

Die Figur 2 zeigt eine Detaildarstellung der beiden Laminierwalzen 10 und 11. Die Trägerbahn 13 ist mit einer Klebeschicht 17 versehen, von der kurz vor dem Zusammenfügen mit der Beschichtungsbahn 1 eine Schutzfolie 18 entfernt wird. Das vorzeitige und unerwünschte Verkleben der Klebeschicht 17 wird mittels eines als Trennblech ausgebildeten Trennelementes 19 verhindert. Dieses Trennelement 19 ragt in den Zwischenraum der beiden Laminierwalzen 10, 11 hinein. Die Laminierwalze 10 ist mit einem Stanzmesser 20 besetzt, welches nach jeweils einer Umdrehung der Laminierwalze 10 den Abschnitt 14, 14a von der Beschichtungsbahn 1 abtrennt. Die Laminierwalze 10 bildet einen Stanzzylinder, während die Laminierwalze 11 ein Gegenstanzzylinder darstellt. Das Stanzmesser 20 durchtrennt dabei von den aufeinanderliegenden Schichten, bestehend aus der Trägerbahn 13, der Klebeschicht 17 und der Beschichtungsbahn 1, lediglich die Beschichtungsbahn 1. Nach dem Abtrennen des Abschnitts 14, 14a wird die Beschichtungsbahn 1 von der in Figur 1 gezeigten Zuführvorrichtung 9 stillgesetzt, bis ein definierter Abstand zum vorangegangenen Abschnitt 14, 14a erreicht ist und dann wieder mit der Geschwindigkeit der Trägerbahn 13 zu den Laminierwalzen 10, 11 transportiert.

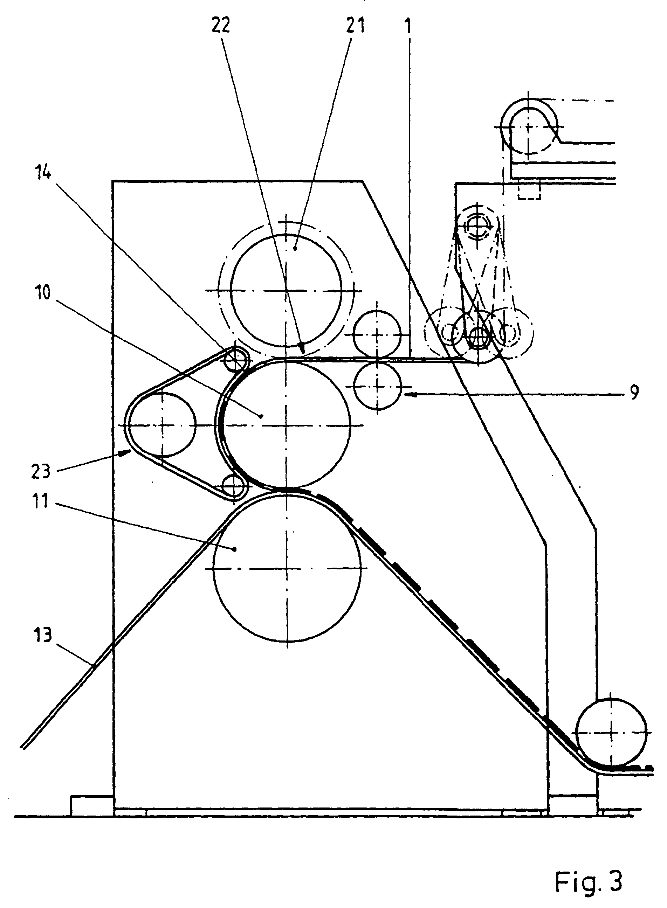

In Figur 3 ist eine besondere Ausführungsform der erfindungsgemäßen Vorrichtung dargestellt. Bei ihr ist oberhalb der Laminierwalze 10 eine Schneidwalze 21 mit einem Stanzmesser 22 angeordnet. Diese Schneidwalze 21 schneidet von der Beschichtungsbahn 1 die Abschnitte 14 ab. Genau wie bei der zuvor gezeigten Ausführungsform werden zwischen den Abschnitten 14 dadurch Zwischenräume erzeugt, dass die Zuführvorrichtung 9 nach jedem Schneidvorgang die Beschichtungsbahn 1 zunächst stillgesetzt wird.

Eine Andrückvorrichtung 23 sorgt dafür, dass die Abschnitte 14 auf der oberen Laminierwalze 10 verbleiben und zwischen beide Laminierwalzen 10, 11 gelangen, um nach einem Umlauf um 180° auf die Trägerbahn aufgebracht zu werden.

### Bezugszeichenliste

- 1: Beschichtungsbahn
- 2: Vorschubantrieb
- 3: Vorratsrolle
- 4: Schneideinrichtung
- 5: Fächer

- 6: Umlenkrolle
- 7: Walze
- 8: Pendel
- 9: Zuführvorrichtung
- 10: Laminierwalze

- 11: Laminierwalze
- 12: Servomotor
- 13: Trägerbahn
- 14: Abschnitt
- 15: Messeinrichtung

- 16: Potentiometer
- 17: Klebeschicht
- 18: Schutzfolie
- 19: Trennelement
- 20: Stanzmesser

- 21: Schneidwalze
- 22: Stanzmesser
- 23: Andrückvorrichtung

## Patentansprüche

1. Verfahren zur Herstellung eines mehrlagigen Etiketts, bei welchem mittels zweier paralleler Laminierwalzen (10, 11) zwei Materialbahnen (1, 13) zusammengeführt werden und bei dem auf eine Trägerbahn (13) mit Abstand zueinander Abschnitte (14, 14a) einer Beschichtungsbahn (1) gelangen, **dadurch gekennzeichnet, daß** die Beschichtungsbahn (1) vor dem Aufbringen auf die Trägerbahn (13) mittels einer Schneideinrichtung (4) unterteilt und mittels eines Fächers (5) in zwei oder mehrere parallel laufende Längsstreifen auf einen gegenseitigen Abstand gespreizt sowie den Laminierwalzen (10, 11) oder einem vorgeschalteten Walzenpaar (10, 21) mit der Umfangsgeschwindigkeit des Walzenpaares abwechselnd zugeführt, dann ein zugeführter Abschnitt (14) der Beschichtungsbahn (1) abgetrennt und anschließend die Beschichtungsbahn (1) für einen definierten Zeitraum stillgesetzt wird.

2. Verfahren nach Anspruch 1, **dadurch gekennzeichnet, daß** eine Trägerbahn (13) mit einer der Beschichtungsbahn (1) zugewandten Klebeschicht verwendet wird.

3. Verfahren nach Anspruch 2, **dadurch gekennzeichnet, daß** die auf der Trägerbahn (13) aufgebrachte Klebeschicht zunächst mit einer Schutzfolie (18) abgedeckt und diese vor dem Zusammenbringen der Trägerbahn (13) mit der Beschichtungsbahn (1) entfernt wird.

4. Vorrichtung zur Durchführung des Verfahrens zur Herstellung eines mehrlagigen Etiketts, bei welchem mittels zweier paralleler Laminierwalzen (10, 11) zwei Materialbahnen (1, 13) zusammengeführt werden und bei dem auf eine Trägerbahn (13) mit Abstand zueinander Abschnitte (14, 14a) einer Beschichtungsbahn (1) gelangen nach einem der vorhergehenden Ansprüche, welche mit einer Einrichtung (4) zum Schneiden der Beschichtungsbahn in mehrere parallel laufende Längsstreifen ausgebildet ist und zum Zusammenführen der zwei Materialbahnen zwei parallele Walzen (10, 11; 10, 21) hat, **dadurch gekennzeichnet, daß** Mittel (20; 21) zum Abtrennen der Abschnitte (14, 14a) der Beschichtungsbahn (1) vorgesehen sind; und daß vor den parallelen Laminierwalzen (10, 11) ein Fächer (5) zum Spreizen der Längsstreifen auf einen gegenseitigen Abstand sowie eine von einem Servomotor (12) angetriebene Zuführvorrichtung (9) angeordnet ist, welche zum abwechselnden Stillsetzen und Antreiben der Beschichtungsbahn (1) mit der Geschwindigkeit der Trägerbahn (13) ausgelegt ist.

5. Vorrichtung nach Anspruch 4, **dadurch gekennzeichnet, daß** die eine Laminierwalze (10) mit mindestens einem Stanzmesser (20) besetzt ist, welches aus der Kontur der Laminierwalze (10) ausschließlich zum Durchtrennen der auf der Trägerbahn (13) aufgebrachten Beschichtungsbahn (1) vorspringt.

6. Vorrichtung nach Anspruch 4, **dadurch gekennzeichnet, daß** der einen Laminierwalze (10) zum Zuführen der Beschichtungsbahn (1) eine zusätzliche Schneidwalze (21) zum Abtrennen der Abschnitte (14, 14a) der Beschichtungsbahn (1) zugeordnet ist und daß die Laminarwalze (10) zum Transport der Abschnitte (14, 14a) zur Trägerbahn (13) auf der anderen Laminierwalze (11) ausgebildet ist.

7. Vorrichtung nach Anspruch 6, **dadurch gekennzeichnet, daß** die Laminierwalze (10) zum Zuführen der Beschichtungsbahn (1) mit einer ihre Mantelfläche zwischen der Schneidwalze (21) und der Laminierwalze (10) abdeckenden Andrückvorrichtung (23) versehen ist.

8. Vorrichtung nach einem der Ansprüche 4 bis 7, **dadurch gekennzeichnet, daß** zum Spannen der Beschichtungsbahn (1) vor der Zuführeinrichtung (9) eine von der Beschichtungsbahn (1) teilweise umschlungene Walze (7) an einem Pendel (8) angeordnet ist.

9. Vorrichtung nach Anspruch 8, **dadurch gekennzeichnet, daß** das Pendel (8) Steuermittel (Potentiometer 16) zum Steuern eines ihm vorgeschalteten Vorschubantriebs (2) zum Abwickeln der Beschichtungsbahn (1) von einer Vorratsrolle (3) hat.

10. Vorrichtung nach Anspruch 9, **dadurch gekennzeichnet, daß** der Fächer (5) zwischen dem Vorschubantrieb (2) und dem Pendel (8) angeordnet ist.

11. Vorrichtung nach einem der Ansprüche 4 bis 10, **dadurch gekennzeichnet, daß** an der Einlaufseite der Laminierwalzen (10, 11) ein die Beschichtungsbahn (1) von der Trägerbahn (13) bis zum Einlauf in die Laminierwalzen (10, 11) trennendes Trennelement (19) angeordnet ist.

12. Vorrichtung nach einem der Ansprüche 4 bis 11, **dadurch gekennzeichnet, daß** zur Steuerung der Zuführeinrichtung (9) vor den Laminierwalzen (10, 11) eine Meßeinrichtung (15) zum Erkennen eines Abschnittsendes auf der Beschichtungsbahn (1) angeordnet ist.

## Claims

1. Method for manufacturing a multiple layer tag, in which two webs of Material (1, 13) are brought together by means of two parallel laminating rollers (10, 11), and in which portions (14, 14 a) of a coating web (1) arrive on a supporting web (13) spaced a part from one another, **characterized in that** the coating web (1) is subdivided by means of a cutting means (4) prior to providing it onto the supporting web (13) and by means of a fanning means (5) is spread in two ore more parallel extending longitudinal stripes to a mutual distance as well as is alternately advanced to the laminating rollers (10, 11) or to a pair of rollers (10, 21) connected in front of these at the circumferencal speed of the pair of rollers, than an advanced portion (14) of the coating web (1) is detached and finally the coating web (1) is stopped for a defined period of time.

2. Method according to claim 1, **characterized in that** a supporting web (13) with an adhesive layer facing the coating web (1) is used.

3. Method according to claim 2, **characterized in that** the adhesive layer applied to the supporting web (13) is initially covered with a protective foil (18) and the foil is removed before bringing together the supporting web (13) and the coating web (1).

4. Device for implementing the method for manufacturing a multiple layer tag according to one of the preceding claims, wherein by means of two parallel laminating rollers (10, 11) two webs of material (1, 13) are brought together and wherein portions (14, 14 a) of a coating web (1) arrive on a supporting web (13) at a mutual distance, the device being provided with a cutting means (4) for cutting the coating webs in a plurality of parallel extending longitudinal stripes, the device comprising two parallel rollers (10, 11; 10, 21) for bringing together the two webs of material, **characterized in that** means (20; 21) for cutting the portions (14, 14 a) of the coating web (1) are provided and that in front of the parallel laminating rollers (10, 11) a fanning means (5) for spreading of the longitudinal stripes to a mutual distance as well as an advancing means (9) driven by a servomotor (12) is arranged, the advancing means (9) is provided for alternating stopping and driving of the coating web (1) at a speed of the supporting web (13).

5. Device according to claim 4 **characterized in that** a laminating roller (10) is occupied with at least one stamping blade (20) which projects from the contour of the laminating roller (10) exclusively for detaching the coating web (1) applied to the supporting web (13).

6. Device according to claim 4, **characterized in that** an additional cutting roller (21) for detaching the portions (14, 14 a) of the coating web (1) is associated with the one laminating roller (10) for advancing the coating web (1), and that the laminating roller (10) for transport of the portions (14, 14 a) to the supporting web (13) is provided on the other laminating roller (11).

7. Device according to claim 6, **characterized in that** the laminating roller (10) for advancing the coating (1) is provided with a pressing means (23) covering its circumferential surface between the cutting roller (21) and the laminating roller (10).

8. Device according to one of claims 4 to 7, **characterized in that** for tensioning the coating web (1) in front of the advancing means (9) a roller (7) partly loped around by the coating web (1) is arranged on a pendulum (8).

9. Device according to claim 8, **characterized in that** the pendulum (8) has control means (potentiometer 16) for controlling without feedback a forward feed drive (2) connected in front of it for winding of the coating web (1) from a stock roll (3).

10. Device according to claim 9, **characterized in that** the fanning means (5) is arranged between the forward feeding drive (2) an the pendulum (8).

11. Device according to one of claims 4 to 10, **characterized in that** a separating element (19) separating the coating web (1) from the supporting web (13) until entry into the laminating rollers (10, 11) is arranged on the feeding side of the laminating rollers (10, 11).

12. Device according to one of claims 4 to 11, **characterized in that** for control of the advancing means (9) a measuring means (15) is arranged in front of the laminating rollers (10, 11) for detection of a portion end on the coating web (1).

## Revendications

1. Procédé destiné à la production d'une étiquette multicouche, dans le cas duquel deux bandes de matériau (1, 13) sont réunies au moyen de deux cylindres de laminage parallèles (10, 11) et dans le cas duquel des tronçons (14, 14a) d'une bande de revêtement (1) arrivent à distance l'un de l'autre sur une bande de support (13), **caractérisé en ce qu'**avant d'être rapportée sur la bande de transport (13) la bande de revêtement (1) est subdivisée à l'aide d'un moyen de coupage (4) et est étalée au moyen d'un éventail (5) à distance mutuelle en deux ou plusieurs rubans longitudinaux s'étendant parallèlement et est avancée en alternance jusqu'aux cylindres de laminage (10, 11) ou jusqu'à une paire de cylindres (10, 21), agencés en amont, à la vitesse circonférentielle de la paire de cylindres, ensuite un tronçon (14) avancé de la bande de revêtement (1) est détaché et ensuite la bande de revêtement (1) est arrêtée pendant un intervalle de temps défini.

2. Procédé selon la revendication 1, **caractérisé en ce qu'**une bande de support (13) est utilisée avec une couche d'adhésif tournée vers la bande de revêtement (1).

3. Procédé selon la revendication 2, **caractérisé en ce que** la couche d'adhésif rapportée sur la bande de support (13) est d'abord recouverte d'une feuille de protection (18) et que celle-ci est enlevée avant de réunir la bande de support (13) avec la bande de revêtement (1).

4. Dispositif pour exécuter le procédé destiné à la production d'une étiquette multicouche, dans le cas duquel deux bandes de matériau (1, 13) sont réunies au moyen de deux cylindres de laminage parallèles (10, 11) et dans le cas duquel des tronçons (14, 14a) d'une bande de revêtement (1) arrivent à distance l'un de l'autre sur une bande de support (13) selon l'une des revendications précédentes, le dispositif étant formé avec un moyen (4) pour couper la bande de revêtement en plusieurs rubans longitudinaux s'étendant parallèlement et le dispositif comprenant deux cylindres parallèles (10, 11; 10, 21) pour réunir les deux bandes de matériau, **caractérisé en ce que** des moyens (20 ;21) sont prévus pour détacher les tronçons (14, 14a) de la bande de revêtement (1); et **en ce que** devant les cylindres de laminage parallèles (10, 11) un éventail (5) pour étaler les rubans longitudinaux à distance mutuelle ainsi qu'un dispositif d'alimentation (9) entraîné par un servomoteur (12) est agencé, ledit dispositif d'alimentation (9) étant prévu pour l'arrêt et l'entraînement alterné de la bande de revêtement (1) à la vitesse de la bande de support (13).

5. Dispositif selon la revendication 4, **caractérisé en ce qu'**un cylindre de laminage (10) est doté d'au moins une poinçonneuse (20) qui dépasse le contour du cylindre de laminage (10) exclusivement pour détacher la bande de revêtement (1) rapportée sur la bande de support (13).

6. Dispositif selon 1a revendication 4, **caractérisé en ce qu'**un cylindre de coupage (21) additionnel pour détacher les tronçons (14, 14a) de la bande de revêtement (1) est associé à un cylindre de laminage (10) pour avancer la bande de revêtement (1) et **en ce que** le cylindre de laminage (10) pour le transport des tronçons (14, 14a) à la bande de support (13) est formé sur l'autre cylindre de laminage (11).

7. Dispositif selon la revendication 6, **caractérisé en ce que** le cylindre de laminage (10) pour avancer la bande de revêtement (1) est pourvu d'un dispositif-presseur (23) recouvrant sa surface circonférentielle entre le cylindre de coupage (21) et le cylindre de laminage (10).

8. Dispositif selon l'une des revendications 4 à 7, **caractérisé en ce que** pour tendre la bande de revêtement (1) un cylindre (7) étant enlacé partiellement par la bande de revêtement (1) est agencé devant le dispositif d'alimentation (9) sur une pendule (8).

9. Dispositif selon la revendication 8, **caractérisé en ce que** la pendule (8) comporte des moyens de commande (potentiomètre 16) pour commander une commande d'avance (2) introduite en avant de celle-ci pour dérouler la bande de revêtement (1) d'un rouleau-provision (3).

10. Dispositif selon la revendication 9, **caractérisé en ce que** l'éventail (5) est agencé entre la commande d'avance (2) et la pendule (8).

11. Dispositif selon l'une des revendications 4 à 10, **caractérisé en ce qu'**un élément de séparation (19) séparant la bande de revêtement (1) de 1a bande de support (13) jusqu'à l'entrée dans les cylindres de laminage (10, 11) est agencé sur le coté alimentation des cylindres de laminage (10, 11).

12. Dispositif selon l'une des revendications 4 à 11, **caractérisé en ce que** pour commander le dispositif d'alimentation (9) un moyen de mesure (15) pour détecter l'extrémité d'un tronçon sur la bande de revêtement (1) est agencé devant les cylindres de laminage (10, 11).
